# EUROPEAN PATENT APPLICATION

(11) **EP 2 180 364 A1**
(43) Date of publication of application: **28.04.2010**
(21) Application number: 08105635.0
(22) Date of filing: 23.10.2008
(51) Int. Cl.: G02B 27/01

(54) **A display and a method of operating a display**

(71) Applicant: ROBERT BOSCH GMBH, 70442 Stuttgart (DE)
(72) Inventor: Richard, Matthieu, 25370, Fourcatier (FR)

(57) **Abstract**

A display for visualizing a picture in a virtual distance comprises: a display screen 2 for generating a real image of the picture at a front side of the display screen 2 and an array of lenses 3 or convex mirrors arranged having their optical axes pointing to different sections of the display screen 2.

## Description

### Background of the invention

The present invention relates to a display and a method of operating a display, in particular a headup display.

Information of several instruments or equipment in a vehicle needs to be brought to the attention of a driver. The driver needs to focus on the instruments or displays of the equipment by turning his eyes away from the street.

Headup displays use a display screen for providing a picture of instruments or other information. A virtual image of the picture is visualized to the driver by optical elements consisting of lenses or mirrors. The spectator has the impression the virtual image is placed in a virtual distance with respect to him or her which is larger than the actual distance to the display screen. The distance can be selected by choosing the focal length of the lenses and mirrors. The virtual image can be superimposed with a view of the street by redirecting the virtual image via the windscreen into the visual field of the driver. The eyes of the driver need no accommodation or movement to perceive information given.

In order to see the virtual image the eyes of the driver need to be in a given eye-box. The view field is limited by the setup of the headup display, in particular a solid angle determined by a diameter of the display screen and the actual distance to the display screen. An increase of the diameter of the display screen makes it necessary to increase the size of the mirrors and lenses as well. Optical limitations enforce an increase of the focal length of the mirrors and lenses along with their diameters. The lenses and mirrors need to be placed further away from the display screen to maintain the virtual distance which enlarges the height of the headup display. In a surrounding of limited space like a car an increase of all three dimensions of the headup display sets severe constraints for a larger view field.

### Summary of the invention

According to a first aspect of the invention a display for visualizing a picture in a virtual distance comprises:
a display screen for generating a real image of the picture at a front side of the display screen and
a group of optical elements for visualizing the real image as an virtual image in a virtual distance comprising an array of lenses or concave mirrors having their optical axes pointing to different sections of the display screen.

The display uses an array of lenses instead of a single large lens. A single lens should have a diameter at least equal to the diameter of the display screen so all information displayed can be seen by a spectator. Optical limitations like aberration may enforce a long focal length for such a large lens.

It has been discovered that a single lens can be replaced by an array of lenses. The lenses are arranged in one plane or along one surface so the array provides at least the same diameter as a single lens. Optical limitations like aberration are defined by the individual lenses of the array. Thus, the array can be placed close to a display screen according to a short focal length of the individual lenses. A compact construction of a display is achievable.

In an embodiment the lenses or concave mirrors are in a distance to the front side shorter than their focal length for visualizing the real image as a virtual image in a virtual distance. A more general embodiment encompassed the previous embodiment by defining that the group of optical elements has focus points at one end of the group of optical elements and the display screen is arranged between the focus points and the group of optical elements.

According to a second aspect of the invention a method for operating a display according to the first aspect for visualizing a picture uses the steps:
determining for each picture element corresponding display elements which emit real light rays through the lenses so the real light rays arrive at a spectator in the same directions as virtual light rays from the picture element in a virtual distance to the spectator.

### Brief description of the drawings

- Fig. 1: shows a diagram of a headup display;
- Fig. 2: shows an illustration for outlining the optics of the headup display;
- Fig. 3: shows an illustration for outlining the optics of the headup display;
- Fig. 4: shows an illumination of several display elements for a single picture element;
- Fig. 5: shows a flow diagram of a method for operating the headup display;
- Fig. 6: shows an illustration for outlining the optics of the headup display;
- Fig. 7: shows a flow diagram of a method for operating a headup display;
- Fig. 8 and 9: show top views on an array of lenses;
- Fig. 10 and 11: show illustrations for explaining a suppression of ambient light;
- Fig. 12: shows a diagram of a further headup display;

### Detailed description of the invention

Now, exemplary embodiments of a display and modes of operation will be described below in detail by referring to the drawings.

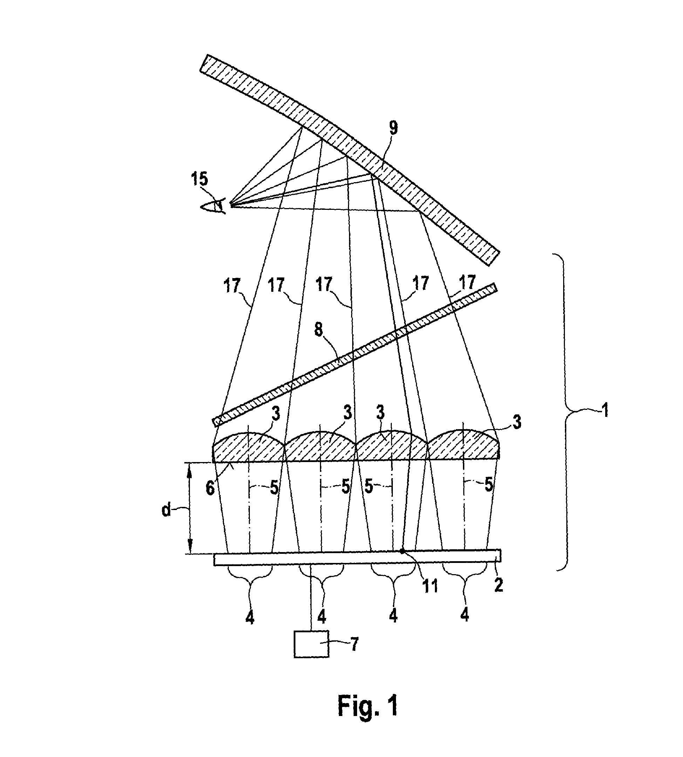

Fig. 1 illustrates a first embodiment of a display 1 which may be used for a headup display. A display screen 2 is provided for generating an image. The display screen 2 may be a self illuminating flat panel display, for instance plasma display, liquid crystal displays (LCDs), organic light-emitting diode displays (OLEDs), light-emitting diode display (LED), laser display, electroluminescent displays (ELDs), surface-conduction electron-emitter displays (SEDs), field emission displays (FEDS) or nano-emissive display (NEDs). Passive display screens 2 based on bistable color elements like electrophoretic displays, bichromal ball displays, interferometric modulator displays, cholesteric displays or bistable nematic liquid crystal displays can be used as well. The display screen 2 may be flat or slightly curved.

The display screen 2 comprises or is coupled to an image processor 7. The image processor controls picture elements of the display screen 2 so a picture, a pictogram, a text message, a sequence of pictures may be generated. The information content of picture to be displayed can be stored locally in the image processor 7 or provided via an interface. A picture generated on the display screen 2 is a real image in terms of optics as a real light ray is emitted by the display screen 2.

A diameter or diagonal of the display screen 2 may be in the range of 100 mm to 400 mm, for instance at least 150 mm, at the most 200 mm. Even larger display screens 2 can be used. A large display screen 2 may be advantageous because it provides a large field of view.

An array of lenses 3 is arranged in front of the display screen 2. The lenses 3 may be of any kind of converging lenses, for instance biconvex, planoconvex, aspherical, free-form lens. Each lens 3 has an optical axis 5. The optical axes 5 of the lenses 3 point to different sections of the display screen 2.

Fig. 1 shows an exemplary array of lenses 3. The lenses 3 have identical optical properties and are placed in the same distance d to the display screen. Each of the lenses 3 may be combined of several lenses, e.g. for correcting for aberration. The lenses 3 are arranged along a planar surface 6 which is in parallel to the display screen 2. Principal planes of the lenses 3 are in one plane parallel to the planar surface 6. The optical axes 5 of the lenses 3 are in parallel.

The distances d of the lenses 3 to the display screen 2 may be chosen shorter than focal distances f of the lenses 3. The distances d are measured from the principle plane of the lenses 3 to optically active display elements on the display screen 3.

Diameters of the lenses 3 are smaller than a diameter of the display screen 2. A ratio of the diameters of the display screen 2 with respect to the lenses 3 may be at least five, for instance at least ten or at least fifteen. The lenses 3 may have diameters in the range of 10 mm to 30 mm, for instance at the most 20 mm, at least 15 mm. The lenses 3 of the array have equal diameters in the example of Fig. 1.

Each of the lenses 3 gathers light rays 17 from a section 4 of the display screen 2 so the light rays 17 arrive in an eye 15 of a spectator. The sections 4 are different for each lens 3 and do not overlap. The display screen 2, thus, can be considered fragmented in sections 4 by the lenses 3. A display element 11 of the display screen 2 within one of the sections 4 is seen through one of the lenses 3 by the first eye 15. Location and size of the sections 4 do not significantly depend on the location of the observing eye 15.

As a spectator has two eyes 15, 16 two situations may arise. Firstly, a second eye of the spectator sees the display element 11 through the same lens 3 as the first eye 15. Secondly, the second eye cannot see the display element 11. In the following it is outlined how the display 1 deals with these cases to visualize a virtual image.

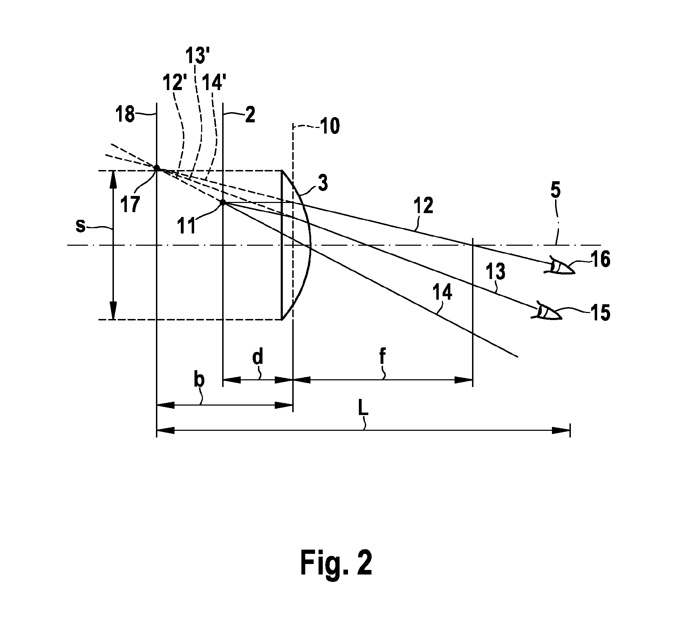

Along with Fig. 2 optics are explained for a situation a spectator sees the display element 11 with both his eyes through a single lens 3a. The lens 3a is in a distance d to the display screen 2 which may be shorter than the focal length f of the lens 3a. The distance d is measured from a principal plane 10 of the lens 3a to a surface of the optically active display elements 11 of the display screen 2. The display element 11 is shown illuminated according to a picture element. Real light rays 12, 13, 14 are emitted towards the lens 3a. The real light rays 12, 13, 14 are subdue to a refraction according to the focal length f of the lens 3a. The real light rays 12, 13, 14 are not in parallel but diverge by a certain angle because the focal plane of the lens 3a is behind the display element 11. A left eye 15 and a right eye 16 of a spectator each perceive one of the real light rays 12, 13. The brain of the spectator interprets an angle between the two directions of the real light rays 12, 13 as measure for a distance to the display element 11 and assumes the shown picture element as a virtual image 17 at a virtual distance b.

The location of the virtual image 17 can be determined graphically. The real light rays 12, 13, 14 are extended straight on the display's side of the lens 3a (dashed line). So called virtual light rays 12', 13', 14' are constructed this way which would look alike real light rays 12, 13, 14 to an eye 15, 16 because they have the same orientation, colour, brightness etc. They are, however, assumed not to be refracted by the lens 3a. The virtual light rays 12', 13', 14' all cross the location of the virtual image 17.

There exists a one-to-one mapping of a real light ray 12, 13, 14 emitted by the display element 11 and a virtual light ray 12', 13', 14' crossing the virtual image 17. Further, each display element 11 can be mapped one-to-one to a virtual image 17 for a lens 3a.

The virtual distance b of a virtual plane 18 is determined by the focal length f of the lens 3a and its distance d to the display screen 2 according to the formula: |b|=|fd|/(|f|-|d|). The lens 3a may have a focal length in the range of 30 mm to 100 mm, for instance at least 50 mm, at the most 80 mm, at the most 50 mm. The distance d may be a few millimetres, e.g. 1 to 5 mm, shorter than the focal length so a virtual distance b of about 1 m to 3 m is achieved.

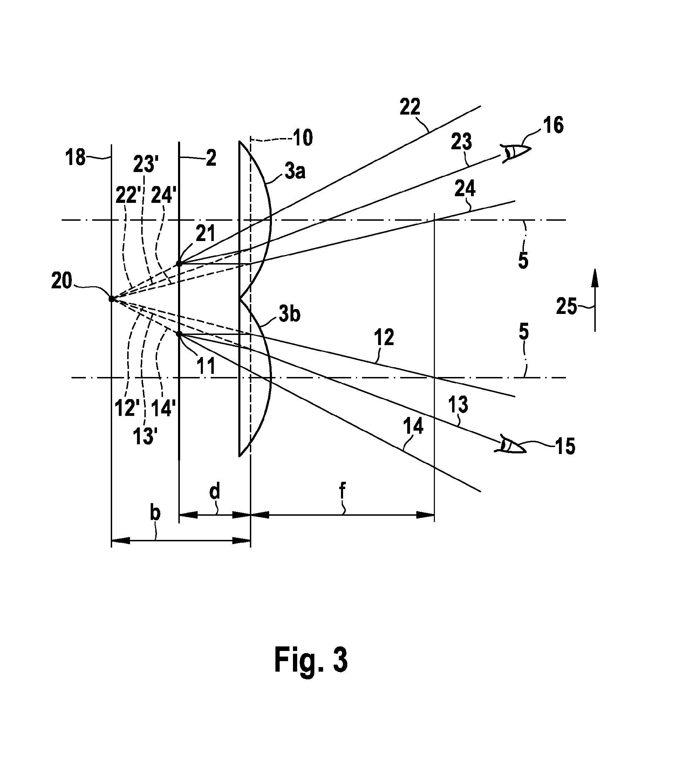

Along with Fig. 3 optics are explained for a situation a spectator sees the display element 11 with only one of his eyes 15 through the first lens 3a. The second eye 16 cannot see the display element 11 through the first lens 3a or any other lens 3b.

An embodiment uses two display elements 11, 21 and two lenses 3a, 3b for the creation of a virtual image of a picture. The embodiment will be demonstrated for a single point 20 of the whole virtual image 20 corresponding to a picture element of the whole picture. The properties of the lenses 3a, 3b can be selected like in other embodiment in particular a distance d of the display screen 2 to the lenses 3a, 3b may be shorter than their focal length f. The arrangement of the first lens 3a and the second lens 3b is chosen so all virtual images of the display elements of the display screen 2 are in one virtual plane 18.

The first display element 11 emits real light rays 12, 13, 14 according to the picture element, so colour and brightness of the first display element 11 are set according to the picture element for instance. The real light rays 12, 13, 14 are refracted by the first lens 3a. Human brain ignores the lens 3a and assumes all rays 12, 13, 14 perceived by the left eye 15 to come straight from the virtual image 20. A location of the first virtual image 20 of the picture element may be determined graphically by constructing virtual light rays corresponding to the light rays 12, 13, 14.

A second display element 21 emits real light rays 22, 23, 24 according to the same picture element, the second display element 21 and the first display element 11 may be set to equal colour and brightness. The real light rays 22, 23, 24 are refracted by the second lens 3b. Human brain ignores the lens 3b and assumes all rays 22, 23, 24 perceived by the right eye 16 to come straight from a second virtual image, too.

The second display element 21 is chosen among all display elements of the display screen 2 by its location such that the location of the second virtual image is identical to the virtual image 20 defined by the first display element 11 and the first lens 3a. The light rays 12, 13, 14; 22, 23, 24 from the first and second display elements 11, 21 seem to come from the same virtual image 20.

The spectator will assume his left and right eyes 15, 16 see the same picture element but under the angle of two directions 13, 23. His brain considers the angle between the directions 13, 23 caused by a distance to the picture element. The distance interpreted by the stereoscopic view matches the virtual distance b defined by the arrangement of the lenses 3a, 3b with respect to the display screen 2.

A movement sidewise of a head does not affect the illusion of the virtual image 20 and its location. The eyes 15, 16 perceive the rays 13, 23 in a first position of the head shown in the example of Fig. 3. Assume the head is now moving to the right (direction 25). The eyes 15, 16 would perceive the rays 12, 22 in a second position of the head. Geometric considerations can be used to demonstrate that the angle between the rays 12, 22 is identical to the angle between the rays 13, 23. Thus, the spectator assumes the virtual image 20 both times in the same virtual distance b.

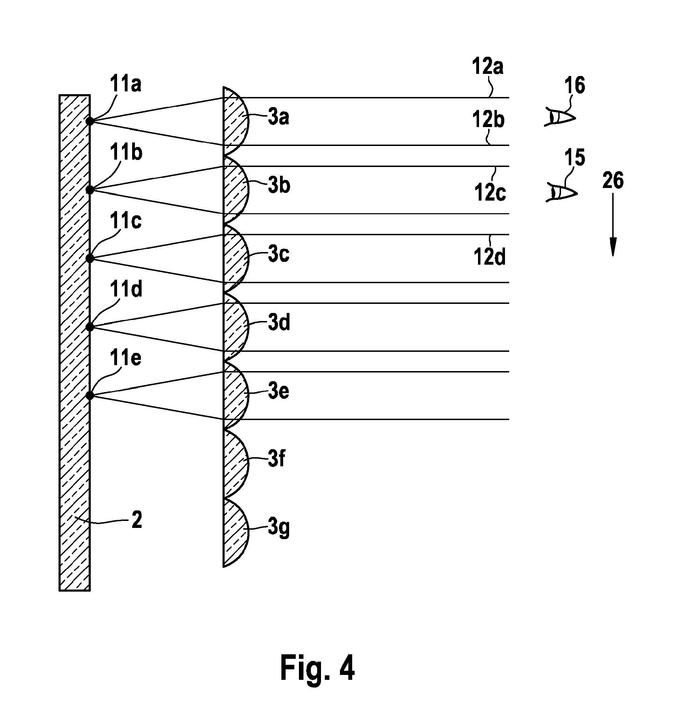

In an embodiment the first and second lenses 3a, 3b may be just a part of a larger array (Fig. 4). Due to a movement of the head the first or second display element 11 a, 11 b behind the first 3a and second lens 3b, respectively, may no longer be visible for the right and left eye 15. The left eye 15, for instance, now perceives further display elements behind a neighbouring third lens 3c. Among these further display elements exists a third display element 11c which provides a virtual image at the same location as the first and second virtual image corresponding to the first and second display elements 11a, 11b. All rays emitted by the third display element seem to come from the same virtual image 20. The third display element 11c is activated so it emits rays according to the same picture element as the second display element 11b and the first display element 11a. Therefore, the spectator is not aware that he or she now looks on a different set of display elements. The illusion of the virtual image 20 of the picture element is maintained.

In general, a given virtual image 20 of a picture element may be visualized by a set of display elements 11, 21, 11a-e and an associated lens 3a-e for each of the display elements 11, 21, 11a-11e. All display elements 11, 21, 11a-e of the set can be simultaneously illuminated according to the picture element. Despite a movement of the head, the spectator will always see the virtual image 20 as long he can look with both eyes 15, 16 on at least one of the display elements 11, 21, 11a-e either through two different lenses 3a-3e or through a single lens 3a-3e.

A method of operating the headup display 1 can be summarized as follows. An image processor 7 determines for each picture element corresponding display elements 11, 21 which emit real light rays 12, 13, 14, 22, 23 through the lenses 3a, 3b so the real light rays 12, 13, 14, 22, 23 arrive at a spectator in the same directions as virtual light rays 12', 13', 14', 22', 23', 24' from a virtual image 20 of the picture element in a virtual distance to the spectator. The display screen 2 is controlled to illuminate these corresponding display elements 11, 21 according to the picture element.

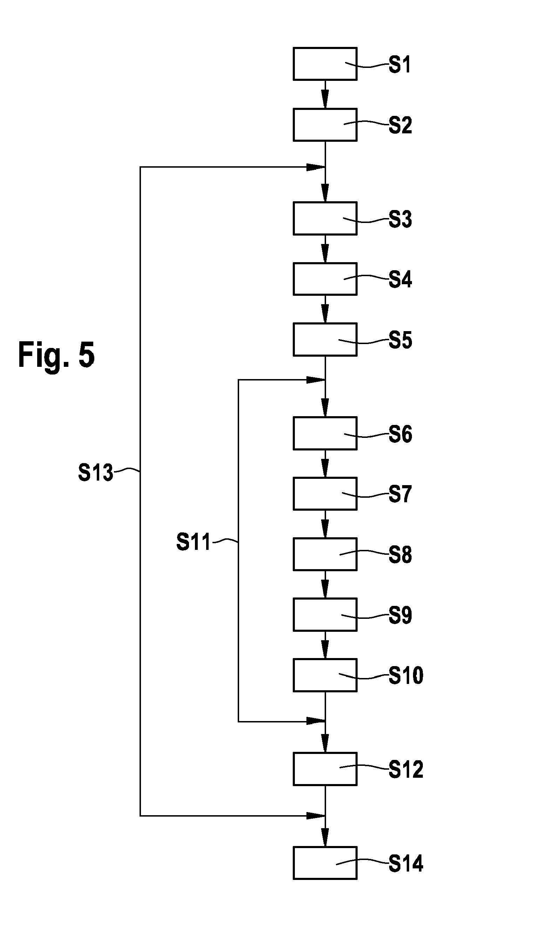

A more detailed example of this method of operation will be explained with reference to the flow diagram of Fig. 5. The method is not meant to be high-performing or limiting but to ease an understanding of underlying principles of the headup display 1.

An image processor generates a picture or loads the picture from a memory (S1). The picture may contain a drawing, a text-based information or a combination of both. The picture may be part of a sequence of pictures. The picture is screened to picture elements, for instance to a bitmap format.

The image processor derives a virtual image of the picture. A virtual plane 18 is determined which is in a virtual distance to the spectator (S2). The picture is placed into this virtual plane 18. The image processor chooses one of the picture elements (S3). Virtual light rays from the one picture element through all lenses 3 are determined (S4).

With reference to Fig. 3 steps for determining a set of display elements 11, 21, 11a-e for the chosen picture element are outlined. Virtual light rays 12', 13', 14', 22', 23', 24' are traced from the virtual image 20 through the first 3a, second 3b and further lenses towards an eye box (S4). The virtual rays 12', 13', 14', 22', 23', 24' are straight lines.

Virtual light rays which lay outside of a eye box may be omitted (S5). The eyes of the spectator are assumed to be in the eye box. The eye box may be 200 mm broad and may be in distance of about 1 m to 30 m with respect to the virtual plane 18.

For each virtual light ray 12', 13', 14', 22', 23', 24' a corresponding real light ray 12, 13, 14, 22, 23, 24 is determined (S6). On the observer's side of the lenses 3a, 3b the virtual rays 12', 13', 14', 22', 23', 24' match corresponding real rays 12, 13, 14, 22, 23, 24. A ray-tracing technique can be used to calculate the real light rays 12, 13, 14, 22, 23, 24 on the display's side of the lenses 3a, 3b starting with the real light rays 12, 13, 14, 22, 23, 24 on the observer's side (S7). The refraction of the lenses 3a, 3b is taken into account (S8). Further optical elements, like additional lenses, windscreen etc. can be considered in the ray-tracing approach. On the display's side of the lenses 3a, 3b the real light rays 12, 13, 14, 22, 23, 24 and the virtual light rays 12', 13', 14', 22', 23', 24' fall apart.

Display elements 11, 21 placed at the intersection of the real light rays 12, 13, 14, 22, 23, 24 with the display screen 2 are determined (S9) and associated to the set of display elements 11, 21 corresponding to the one picture element and its virtual image 20 (S10).

The steps S6 to S10 are repeated for all virtual light rays 12', 13', 14', 22', 23', 24' starting from the virtual image of the one picture element (S11).

The image processor selects a next of the picture elements (S12) and performs the steps S3 to S11. The loop ends when all picture elements have been processed (S13).

All display elements are illuminated according to the picture element they are associated with (S14). The picture element defines features like colour, intensity, a pattern, etc. A spectator now sees a virtual image of the picture. The pattern displayed on the display screen is different to the picture as several display elements may be used to present a single picture element.

An other embodiment of a method for operating the headup display 1 just illuminates the display elements 11, 21 necessary to obtain a virtual image. A head tracker measures the position of the eyes. Virtual rays from the picture element to the eyes are determined or selected among the virtual rays determined above by step S4. The further processing of the virtual rays is equivalent to the above embodiment.

Instead of a ray-tracing technique other algorithms for finding the display elements associated to the picture element in the virtual plane can be used.

A simplified technique to determine the set of display elements 11, 21 uses virtual light rays 13', 23' from the virtual image 20 through the optical centres of the lenses 3a, 3b. The crossing point of these virtual light rays 13', 23' with the display's screen 2 set the location of the display elements 11, 21.

A mapping of the set of display elements 11, 21 to one point 20 of the virtual image is fixed by the optical setup, namely the lenses 3a, 3b. The mapping may be stored in lookup tables. A processing load for the image processor 7 may be reduced by using the lookup tables instead of the ray-tracing approaches outlined herein above.

In an embodiment a diameter s of the lenses 3, 3a-3e may be chosen small such the left eye and the right eye 15, 16 see the virtual image 20 always through two different lenses 3, 3a-3e. This condition is met if a ratio of a diameter s of the lenses 3 to a separation E of the eyes 15, 16 is smaller then a ratio of the virtual distance b to the distance L between the virtual plane 18 and the eyes 15, 16 (s / E < b / L). An exemplary diameter s of about 3 cm may be sufficiently small.

The embodiment of the headup display 1 may benefit of the small diameter of the lenses for visualizing a three dimensional virtual image. If a whole virtual image is created by a single lens or the virtual image is seen by both eyes through a single lens the virtual distance is defined by the relative placement of the lens to the display screen and the focal length of the lens. All picture elements will be placed in a virtual plane at the same virtual distance. This restriction can be lifted when the lenses are sufficiently small so the left eye sees the virtual image through an other lens as the right eye.

A perceived virtual distance is defined by the angle between two light rays one seen by the left eye and the other by the right eye. This angle is controlled by selecting the display elements.

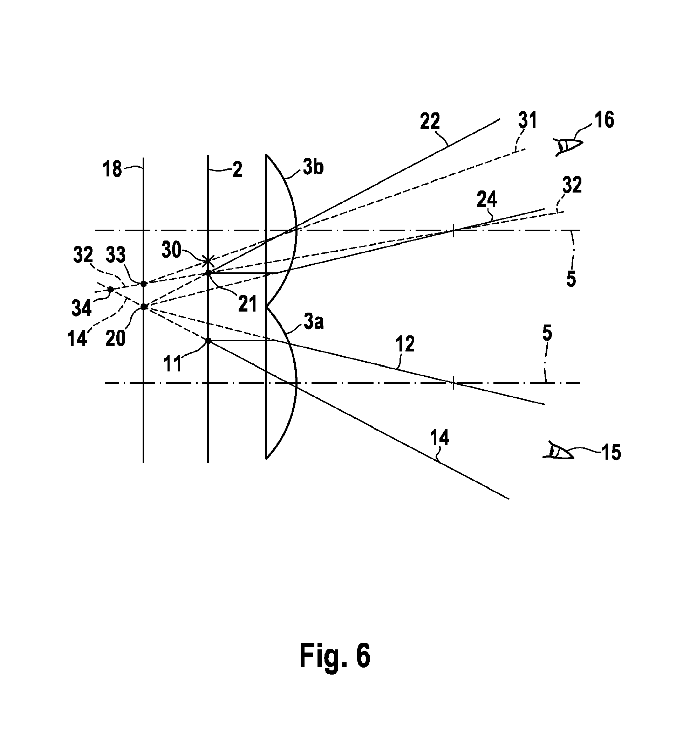

Fig. 6 shows three display elements 11, 21, 30 of a display screen 2.

In a first case, a first set 11, 21 of the display elements 11, 21, 30 is illuminated according to the picture element. A virtual image 20 of the picture element is seen by the eyes 15, 16. The first set of display elements is chosen so light rays 12, 14, 22, 24 from the first and the second display element 11, 21 seem to be in origin from the virtual image 20. A spectator can thus look at any two of these light rays and have the illusion of the same virtual image 20.

In a second case, a second set 11, 30 of the display elements 11, 21, 30 is illuminated according to the picture element. The second set of display elements is chosen so the light rays 31, 32 of the one display elements 30 emerge from a different virtual image 33 than the light rays 12, 14 of the other display element 11.

The eyes 15, 16 of the spectator will see a first real light ray, e.g. 14, of the one display element 11 incoming from a first direction and a second real light ray, e.g. 32, of the other display element 21 incoming from a second direction. The two real light rays 14, 32 give the illusion to be from a single virtual image 34 which is in a distance defined by the angle between the two directions. The virtual image 34 can be geometrically represented as the intersection of the two virtual light rays 14, 32 falling into the eyes. In the example shown in Fig. 6, the virtual image 34 lies behind the virtual plane 18 defined by the optical properties of the headup display 1.

The virtual image 34 of the picture element and its location depend on the position of the eyes 15, 16. For instance, the left eye 15 switches over from the ray 14 to the ray 12. The virtual light ray 12 does not cross the location of the virtual image 34. The virtual light ray 12 will, hence, define virtual images at other locations.

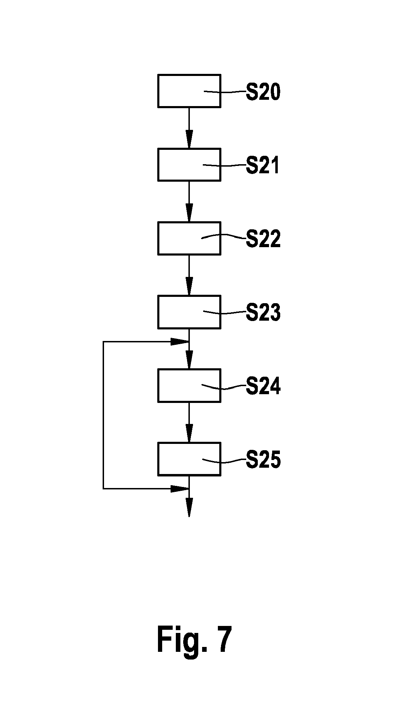

An embodiment of a method for operating the headup display is outlined with reference to the flow diagram of Fig. 7. Picture elements which shall be visualized in a virtual plane 18 defined by the optical setup of the lenses 3 and the display screen 2 can be dealt according to one of the above embodiments (S20). A position of the left eye 15 and the right eye 16 are determined (S21). This may be achieved by a head tracker. An image processor selects one of the picture elements to be visualized outside of the virtual plane 18 (S22). The picture element is placed at its location at a virtual distance to the spectator (S23). A left virtual light ray from the picture element to the left eye is traced (S24). A ray-tracing technique or an other algorithm are used to determine a left display element 11 which emits a real light ray 14 falling into the left eye 15 in the same direction as the left virtual light ray (S25). The steps S24 and S25 are repeated for the right eye to obtain a right display element 30 (S26). The image processor loops the steps S22 to S26 over all picture elements. The image processor 7 cycles over the steps S20 to S26 with a rate depending on the movement speed of the head. Alternatively, a fixed cycling rate can be used.

A further embodiment corrects the virtual image for distortions and/or optical aberrations caused by a windscreen. The windscreen of a vehicle is curved and a radius of curvature may be different in horizontal and vertical directions and even depend on a location on the windscreen. The local curvature of the windscreen is considered as an optical element. The above methods of constructing a real light ray departing from a virtual light ray can be applied. This may be beneficial for unwrapping techniques. Unwrapping techniques can be applied differentially. Reconsider the example of figure 1. Each lens 3 can be associated to a specific section 4 on the display screen 2 and accordingly to a specific section of the windscreen 9. The windscreen 9 may act like a focusing mirror. The curvature of the windscreen is not uniform and, therefore, some sections may have a focusing length longer than other sections. This may be compensated for by having lenses 3 in the array of shorter and longer focusing length so the overall focusing properties of the light path between the spectator and the display screen 2 is equal..

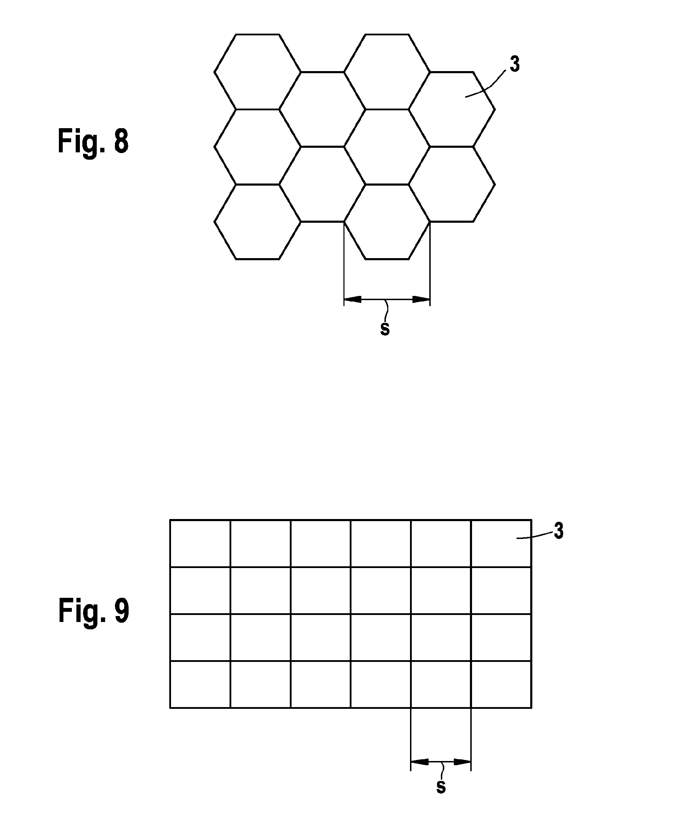

A top view on the array of lenses are shown in Fig. 8 and 9. The lenses 3 may have rectangular, quadratic, hexagonal, triangular or other suitable cross-sections orthogonal to their optical axes 5 to allow a close arrangement of the lenses 3 on the surface 6. The lenses 3 may be made of glass or transparent polymers. Different manufacturing processes can be applied. Individual lenses 3 may be glued together or placed on a supporting grid. A moulding process can be performed for manufacturing the array of lenses 3 in one step.

Polishing steps may be necessary to achieve a sufficient quality of the optical surfaces. Additional coatings 6 can be applied on the lenses 3. An anti-reflection coating 6 may be used to reduce intensity losses due to reflections at the lenses 3 and especially to reduce the reflection on surfaces of the lenses 3 from external disturbing light sources (sun, candelabra...). The anti-reflection coating 6 may be optimized for the spectra used by the display screen 2. The transmittance of the coated lenses 6 may increase in particular for a light of a wavelength used by monochrome display screen 2. To even more reduce the reflections from external sources an optical band pass filter 8 may be placed above the lenses 3. The band pass filter 8 transmits light from the display screen 2. The other parts of the spectra are reflected or absorbed.

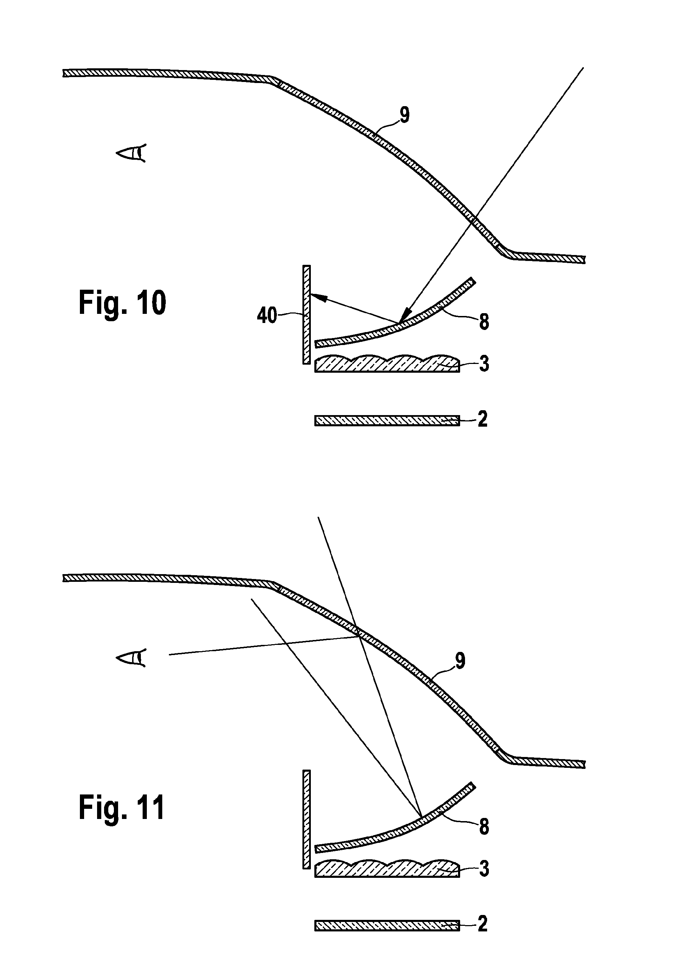

The curvature of the band pass filter can be adapted to reflect ambient light from the sun or lamps out of the viewing box of the spectator (Fig. 10 and 11). Any light falling through a windscreen 9 on the band pass filter 8 may be reflected against a blocking device, an absorber 40 or the ceiling of the car. The band pass filter 8 may have a surface which is bent in a concave manner as seen from the lenses 3.

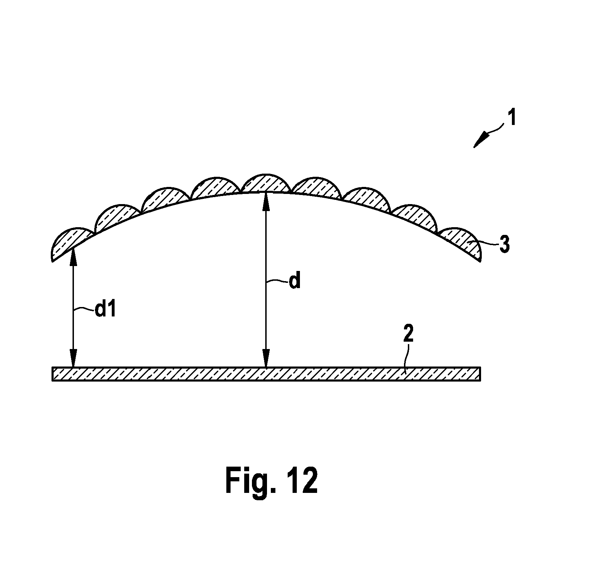

An other embodiment of a headup display 1 is illustrated in Fig. 12. Lenses 13 placed at the margin of the array are at a shorter distance d to the display screen 2. The surface 16 is curved. The optical axes 5 remain directed to different sections of the display screen 2. In other configuration the marginal lenses are placed in a larger distance to the display screen than the centre lenses. Further, the lenses 3 can be arranged along a plane having the same curvature as the display screen 2. The lenses 3 may be of a different focal length.

The above embodiments use an array of lenses 3. An other headup display may use an array of focusing mirrors instead of the lenses 3. The mirrors are arranged along one plane or curved surface. The distance of the display element to the mirrors is shorter than a focal length of the mirrors. A headup display comprising an array of mirrors can be operated the same fashion as the other headup displays described herein above. The mirrors and lenses may be formed by holographic optical elements.

A further embodiment comprises an array of focusing lenses like in the above embodiments. Additional focusing and defocusing optical elements are provided. The additional optical elements can be arranged between the array of lenses 3 and the display screen 2 and/or on an observer's side of the lenses 3. A diameter of the additional optical elements may be larger than a diameter of the lenses of the array. An additional optical element may even have a size larger than the display screen.

The group of the array of lenses and the additional optical elements has several focal points arranged on a surface due to the array of lenses. The number of focal points may be equal to the number of lenses 3 in the array of lenses. The display screen is arranged between the surface of focal points and the group of optical elements like in the above embodiments. The display screen is divided in several sections according to the array of lenses and virtual images of the sections can be seen.

## Claims

1. A display for visualizing a picture in a virtual distance comprising:
a display screen (2) for generating a real image of the picture at a front side of the display screen (2) and
a group of optical elements for visualizing the real image as a virtual image in a virtual distance comprising an array of lenses (3) or concave mirrors having their optical axes pointing to different sections of the display screen (2).

2. The display according to claim 1, wherein the group of optical elements has focus points at one end of the group of optical elements and the display screen (2) is arranged between the focus points and the group of optical elements.

3. The display according to claim 1 or 2, wherein the lenses (3) or concave mirrors are arranged in a distance to the front side shorter than their focal length.

4. The display according to one of the preceding claims, wherein the lenses (3) and or convex mirrors are arranged along one surface.

5. The display according to one of the preceding claims, wherein the lenses (3) are arranged in a square, rectangular, hexagonal, triangular arrangement.

6. The display according to one of the preceding claims, wherein the lenses are provided with an antireflective coating.

7. The display according to one of the preceding claims, wherein a band-pass filter window translucent for a wavelength emitted by the display screen (2) is arranged in front of the lenses (3) as seen from a spectator's view.

8. The display according to one of the preceding claims, wherein the band-pass filter window is concavely curved with respect to the arrangement of lenses (3) for reflecting light incoming through a windscreen out of the sight field of the spectator.

9. A method for operating a display according to one of the claims 1 to 9 for visualizing a picture:
determining for each picture element corresponding display elements which emit real light rays through the lenses (3) so the real light rays arrive at a spectator in the same directions as virtual light rays from the picture element in a virtual distance to the spectator.

10. The method according to claim 9, wherein the corresponding display elements are read from a lookup table.
